# FASCICULE DE BREVET EUROPEEN

(11) **EP 2 148 489 B1**
(45) Date de publication et mention de la délivrance du brevet: **16.10.2019**
(21) Numéro de dépôt: 09161643.3
(22) Date de dépôt: 02.06.2009
(51) Int. Cl.: H04L 29/06

(54) **Etablissement et contrôle d'appel par équipement tiers**
Verbindungsaufbau und Steuerung durch ein Drittgerät
Call setup and control by third-party device

(30) Priorité: 25.07.2008 FR 0855102
(43) Date de publication de la demande: 27.01.2010
(73) Titulaire: Provenance Asset Group LLC, Pittsford, NY 14534 (US)
(72) Inventeur: Froment, Thomas, 91310, Longpont sur Orge (FR); Ligot, Arnaud, 5000 Namur (BE)
(74) Mandataire: Novagraaf Technologies

(56) Documents cités:
- US-A1- 2003 177 099
- US-A1- 2006 210 036
- US-A1- 2008 084 868
- US-A1- 2008 225 835
- US-B1- 7 266 591
- ROSENBERG DYNAMICSOFT J PETERSON NEUSTAR H SCHULZRINNE COLUMBIA UNIVERSITY G CAMARILLO ERICSSON ADVANCED SIGNALLING RESEARCH LAB J: "Best Current Practices for Third Party Call Control in the Session Initiation Protocol; draft-ietf-sipping-3pcc-05.txt", IETF STANDARD-WORKING-DRAFT, INTERNET ENGINEERING TASK FORCE, IETF, CH, vol. sipping, no. 5, 27 octobre 2003 (2003-10-27), XP015027829, ISSN: 0000-0004
- ROSENBERG J ET AL: "RFC 3725; Best Current Practices for Third Party Call Control (3pcc) in the Session Initiation Protocol (SIP)", INTERNET CITATION, [Online] XP002444155, Extrait de l'Internet: URL:http://www.ietf.org/rfc/rfc3725.txt> [extrait le 2007-07-24]

## Description

La présente invention est relative à l'établissement et au contrôle d'appels établis entre deux équipements de communication, par un troisième équipement du réseau de communication.

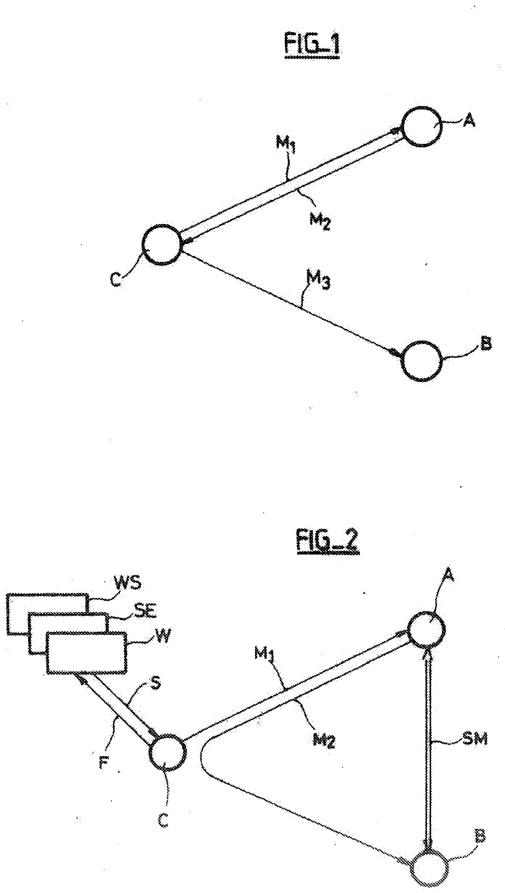

Une telle problématique est connue sous l'acronyme 3PCC (*Third-party Call Control*) de l'homme de métier. Elle est illustrée par la figure 1 sur laquelle un équipement de réseau C souhaite déclencher l'établissement d'une session de communication (ou appel, « call » en langue anglaise) entre deux autres équipements A et B. Ce déclenchement peut lui-même avoir été provoqué par un stimulus reçu par l'équipement de réseau C, qui peut être de différente nature.

Dans les réseaux de communication modernes, l'établissement de sessions de communication (multimédias ou non) est réalisé par des échanges de messages de signalisation, notamment conformes au protocole SIP. Ce protocole est spécifié par le RFC 3261 de l'IETF intitulé « Session Initiation Protocol ».

Il est connu de l'homme du métier de mettre en oeuvre le contrôle d'appel par tiers (3PCC) sur un réseau de communication utilisant le protocole SIP.

La demande de brevet US 2006/020036 présente un tel contrôle d'appel (3PCC). Celui-ci est toutefois assez basique et ne permet que le déclenchement de l'appel. Une fois la communication établie, le contrôle de l'appel échappe à l'initiateur qui ne peut plus ni le modifier, ni le terminer. Il ne peut plus, non plus, obtenir d'information sur l'état de la communication (c'est-à-dire être informé de sa terminaison, de sa durée etc.)

Cette solution ne correspond aussi plus au contrôle d'appel par tiers tel que défini par le RFC 3725.

Ce RFC 3725 de l'IETF est intitulé « Best Current Practices for Third Party Call Control (3pcc) in the Session Initiation Protocol (SIP) ». Il décrit plusieurs solutions présentant des inconvénients majeurs et une solution conseillée.

Toutefois, cette solution conseillée présente également des inconvénients importants.

Tout d'abord, le document RFC 3725 lui-même admet que la solution qu'il recommande présente l'inconvénient d'engendrer une situation dans laquelle l'utilisateur du terminal appelant A entendra un long silence avant que l'appel ne soit effectivement réalisé.

Il est possible de contrecarrer cet inconvénient en mettant en oeuvre un serveur d'annonces qui joue une musique d'attente ou un message d'information. Mais cette solution nécessite le déploiement d'un équipement supplémentaire et la complexification du processus d'établissement d'appel.

Par ailleurs, la solution recommandée par le RFC 3725 nécessite que l'équipement C se comporte comme un B2BUA (« *Back-fo-Back User Agent* ») pour le protocole SIP. Un tel B2BUA a le désavantage d'être très peu spécifié par le RFC 3261 et les différents travaux de l'IETF. Il nécessite donc d'importants travaux de spécifications et de développements avant d'être déployés, dès lors que l'on sort des cas simples.

Le RFC 3725 ne présente qu'un cas simple de fonctionnement, mais un cas plus général nécessite de spécifier le comportement de l'équipement C dans plusieurs autres situations ; par exemple, si l'utilisateur appelé possède plusieurs terminaux, ou si la session doit interagir avec d'autres services du réseau de communication, ou bien dans le cadre d'une mise en oeuvre conforme à l'architecture standardisé IMS (*IP Multimedia Subsysfem*) telle que spécifiée par les organismes 3GPP et TISPAN qui nécessite d'établir un appel en utilisant les extensions décrites dans la RFC 3262 (c'est-à-dire les messages « PRACK ») afin de fournir des garanties de qualité de service. D'autres situations à prendre .en compte comprennent les cas de renégociation du média, les annulations, les situations contradictoires (quel comportement adopter lorsque l'appelant envoie un message d'annulation, et l'appelé un message de renégociation 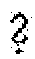 )

Dans tous ces cas, les travaux de spécification de la machine à états gérant le protocole SIP au sein de l'équipement C avec les réémissions potentielles, les cas d'erreurs, etc. sont extrêmement complexes et rendent en pratique la solution difficilement utilisable.

En outre, les équipements de type B2BUA nécessitent le maintient d'informations contextuelles afin de pouvoir gérer l'interaction entre les sessions multimédias gérées. Cela pose le problème de la mémorisation de ces informations contextuelles. D'une part, le volume représenté peut devenir important et nécessiter des capacités de stockage importantes, d'autre part, il est primordial de prévoir des mécanismes de sécurisation de ces informations de contexte afin de palier une éventuelle défaillance de l'équipement C.

Enfin, la solution conseillée par le RFC se base sur des messages d'invitation SIP « sans offre » (c'est-à-dire ne proposant pas de modalités d'établissement de la session multimédia). Or, ces messages ne sont pas toujours bien supportés par les équipements de communication. La solution proposée peut donc engendrer des problèmes d'interopérabilité.

Pour toutes ces raisons-là, les solutions exposées par le RFC 3725 ne sont pas satisfaisantes.

Un autre état de l'art est constitué du document « draft-bhatia-3pcc-refer-01.txt » intitulé « 3pcc using the REFER method ».

Selon cette solution, l'équipement contrôleur C transmet à l'agent A un message de signalisation M₁ de type « REFER ». Ce message de signalisation contient un entête « refer-to » qui indique l'adresse de l'équipement contrôler C. Conformément au RFC 3515 qui spécifie le message « REFER », à sa réception, l'agent A transmet un message d'invitation M₂ (« INVITE ») au contrôleur C qui peut le retransmettre à l'agent B (message M₃).

Cette solution présente toutefois des inconvénients importants.

Afin que le contrôleur C puisse déterminer que le message d'invitation M₂ est une réponse au message M₁, il doit y insérer un paramètre « replace » ainsi qu'indiqué au paragraphe 4.0 du document. Or, ce paramètre est assez peu supporté par les agents de communication et son utilisation peut donc engendrer des problèmes d'interopérabilité.

Il doit également créer un contexte afin de pouvoir gérer la retransmission du message d'invitation M₂ vers l'agent B, dans le cas où une session n'était pas préalablement établie. Ce contexte est précisé par le paramètre « replace ». Cette solution pose donc les mêmes problèmes liés à la mémorisation d'un contexte que ceux évoqués précédemment.

Enfin, le contrôleur C se comporte, dans cette solution, comme un B2BUA, car un traitement spécifique doit être implémenté pour gérer la transmission du message d'invitation M₁ et la convergence des deux communications. Les documents US 2008/084868 et US2008/225835 décrivent également l'état de la technique.

L'invention vise donc à résoudre ces différents problèmes.

Un premier objet de l'invention est un procédé d'établissement d'une session de communication entre deux agents de communication déclenchée par la réception d'un événement par un élément tiers de communication. Ce procédé est novateur en ce que, suite à cette réception d'événement, l'élément tiers transmet à un premier desdits agents un message de signalisation adapté pour provoquer l'émission par celui-ci d'un message d'invitation destiné au second des deux agents (B) et prévu pour passer par l'élément tiers (C).

Selon un mode de réalisation de l'invention, le message de signalisation peut être un message « REFER » conforme au protocole SIP, contenant une première information identifiant le second des agents comme destinataire du message d'invitation et une deuxième information identifiant l'élément tiers comme élément de la route du message d'invitation,

La première information peut être incluse dans un entête « Refer-to » du message de signalisation.

La deuxième information peut également être incluse dans l'entête « refer-to » et distinguée de la première information par un signe d'échappement, et l'élément tiers détermine la première information à partir de l'entête afin de transmettre le message d'invitation vers le second agent. Dans ce cas, l'élément tiers peut supprimer le contenu de l'entête « refer-to » à partir du caractère « @ » et remplacer ce signe d'échappement par un caractère « @ » afin de déterminer la première information.

Selon une autre mise en oeuvre de l'invention, la deuxième information peut être incluse dans un entête « refer-route » du message de signalisation.

Selon une autre mise en oeuvre de l'invention, elle peut être incluse comme paramètre dudit entête « refer-to ».

L'élément tiers de communication peut transmettre des informations de retour au dispositif à l'origine dudit événement.

Un des agents de communication peut être un serveur de contenu, notamment un serveur d'annonces.

L'invention a également pour objet un élément tiers de communication pour l'établissement d'une session de communication entre deux agents de communication à la réception d'un événement. Cet élément tiers de communication se caractérise en ce qu'il est prévu pour transmettre à un premier des agents un message de signalisation adapté pour provoquer l'émission par celui-ci d'un message d'invitation destiné au second des agents et prévu pour passer par ledit élément tiers.

Un troisième objet de l'invention est réseau de communication comportant au moins un élément tiers de communication selon le second objet.

En provoquant la transmission par l'agent A d'un message d'invitation destiné à l'agent B et prévu pour passer par le contrôleur C, l'invention résout le problème technique de l'établissement et du contrôle d'une session 3pcc, sans engendrer les inconvénients des solutions de l'état de la technique.

En effets un tel message est automatiquement transmis vers l'agent B par le contrôleur C sans nécessiter la mémorisation d'un contexte par celui-ci. Il agit conformément au comportement d'un « proxy » tel que défini par le RFC 3261. Une telle solution permet donc de s'affranchir à la fois des problèmes liés à la mémorisation d'informations contextuelles et des problèmes d'implémentation d'un dispositif de type B2BUA.

Il peut être choisi d'utiliser un proxy dit « stateful », c'est-à-dire mémorisant des informations contextuelles, mais ces informations ne concernent alors que des éléments du dialogue SIP et non pas une machine à états complexe telle celle d'un dispositif de type B2BUA.

L'invention et ses avantages apparaîtront de façon plus claire dans la description qui va suivre en liaison avec les figures annexées.
La figure 1, précédemment commentée, représente l'état de la technique.
La figure 2 schématise un réseau de communication mettant en oeuvre le procédé selon l'invention.

Le déclenchement de l'établissement d'une session de communication entre deux agents par un élément tiers peut être provoqué par différents événements ou stimuli reçus sur cet élément tiers. Deux exemples sont illustrés sur la figure 2.

Un serveur web W peut présenter une interface à un utilisateur. En interagissant avec cette interface homme-machine, l'utilisateur peut provoquer l'émission d'un stimulus S vers l'élément tiers C.

Par exemple, le serveur W peut afficher des informations relatives à un correspondant (une entreprise, un particulier...) et en cliquant sur un lien donné, l'utilisateur peut déclencher la transmission de ce stimulus (ou événement) afin d'in fine établir une session de communication multimédia entre son terminal de communication et celui du correspondant.

Cet événement peut donc être un message conforme au protocole HTTP.

L'événement S peut également être un message de signalisation SIP transmis par un élément de signalisation SE tel un « SIP Proxy », un élément fonctionnel de type CSCF conforme à l'architecture IMS (« IP Multimedia System »)...

L'événement S peut aussi provenir d'un service web (« web service ») et être conforme au protocole SOAP.

Cet événement ou stimulus S contient les informations nécessaires à l'élément de signalisation S pour déterminer les paramètres de la session multimédia SM à établir. Notamment, ces informations doivent identifier les deux agents A et B entre lesquels elle doit être établie.

A la suite de la réception de cet événement S, l'élément tiers C transmet un message de signalisation M₁ à l'agent considéré comme initiateur de la session multimédia SM. Cet agent peut être déterminé par le contenu du stimulus S. Dans l'exemple de la figure 2, cet agent initiateur est l'agent A.

Les agents sont des agents UAC ou UAS (respectivement « *User Agent* Client » et « *User Agent Server* ») selon la terminologie du RFC 3261 de l'IETF. Il peut s'agir de terminaux de communication de différents types (téléphones fixes ou portables, ordinateurs, assistants numériques personnels, etc.) ou d'autres types de dispositifs interagissant ou non avec un utilisateur.

Il peut par exemple s'agir d'un serveur applicatif ou un serveur de contenu, tel un serveur d'annonces.

Le message de signalisation M₁ peut être mis en oeuvre de différentes façons. Il peut notamment s'agir d'un message de signalisation « REFER » conforme au protocole SIP. Un tel message « REFER » est spécifié par le RFC 3515 de l'IETF et a pour objectif de permettre le transfert d'appel en cours d'une session de communication en déclenchant chez son récepteur l'émission d'un message d'invitation « Invite ».

Selon ce mode de réalisation de l'invention, il contient une première information identifiant l'agent B comme destinataire du message d'invitation M₂, et une seconde information identifiant l'élément tiers C comme élément de la route par lequel le message d'invitation M₂, doit être transmis.

Typiquement, la première information peut être l'adresse physique ou l'adresse logique de l'agent B et est incluse dans un entête « Refer-To » du message de signalisation M₁.

Conformément au RFC 3515, l'entête « Refer-To » est automatiquement utilisé par l'agent A, récepteur du message de signalisation M₁, pour construire le message d'invitation M₂. Plus précisément, l'adresse contenue dans l'entête « Refer-To » est utilisée pour construire l'entête « To » du message d'invitation M₂.

La deuxième information oblige le message d'invitation M₂ à avoir l'élément tiers C dans sa route. L'objectif d'une telle contrainte est de permettre à cet élément tiers d'être informé de l'ensemble du trafic de signalisation entre les agents A et B résultant du message de signalisation M₁. Ce trafic inclue les messages de types « 200 Ok », « Ack », « Ringing », les messages d'erreurs, les messages de terminaison (« Bye »), etc.

Celui-ci peut être nécessaire afin de transmettre des informations de retour F au dispositif WS, SE, W à l'origine du stimulus S.

Ces informations peuvent par exemple être utilisées pour afficher sur une interface homme-machine le statut de la communication : « établissement », « en cours », « pas de réponse »...., la durée écoulée de la communication, etc.

Cela peut être également nécessaire pour permettre à l'équipement tiers C de contrôler la communication, et notamment de pouvoir l'interrompre. Dans le cas où l'agent appelé est un serveur de contenu, le contrôle peut consister en la transmission de message de réinvitation et de changements de paramétrage de la session (par exemple un changement de la résolution de la vidéo...).

La deuxième information, identifiant l'élément tiers, peut être incluse dans le message de signalisation M₁ de différentes façons.

Selon un premier mode de réalisation, elle est incluses dans un entête « Refer-route ».

Selon l'invention, cet entête « refer-route » est automatiquement utilisé par l'agent B pour construire l'entête « route » du message de signalisation M₂. Il est à noter que la dénomination « refer-route » est arbitraire et que l'invention concerne tout type de nouvel entête visant l'objectif de l'entête « refer-route » explicité ci-dessus.

La deuxième information contenant l'adresse (logique ou physique) de l'équipement tiers C, l'entête « route» du message d'invitation M₂ fera en sorte qu'il passe obligatoirement par celui-ci.

Conformément au comportement normal du protocole SIP, l'entête « route » est automatiquement réutilisé par les messages subséquents transmis par l'agent B de sorte que l'ensemble du trafic entre les deux agents A et B transite automatiquement par l'élément tiers C.

Un autre mode de réalisation de l'invention consiste à inclure la deuxième information dans l'entête « refer-to » mais en la distinguant de la première information par l'utilisation d'un signe d'échappement et de sorte que le message d'invitation M₂ est directement transmis à l'élément tiers C

Le signe d'échappement peut par exemple être un simple caractère, tel que « % ». Les seules contraintes sont que ce signe d'échappement ne doit pas pouvoir se rencontrer dans une adresse logique ou physique, et que globalement le contenu de l'entête « refer-to » soit grammaticalement correct et adapté pour que le message d'invitation M₂ soit effectivement transmis à l'élément tiers.

L'entête « refer-to » peut alors avoir pour forme :
Refer-to: <sip:b%db.com@dc.com>

Cet entête est automatiquement recopié dans l'entête « To » du message de signalisation M₂ transmis par l'agent A. Le réseau de communication interprète cet entête pour le transmettre à l'élément correspondant au domaine « dc.com » de façon connue en soi. Il est donc finalement transmis à l'élément tiers C.

Cet élément tiers est adapté pour analyser l'adresse sip:b%db.com@dc.com. Il supprime la chaîne de caractères débutant du caractère « @ » et remplace le signe d'échappement par ce caractère « @ ». Il en résulte l'adresse sip:b@db.com à laquelle il doit transmettre le message de signalisation M₂. Celui-ci aboutit donc bien finalement à l'agent B. Le traitement appliqué par l'équipement tiers C ne nécessite donc bien aucune information contextuelle ; il peut donc s'agir d'un proxy dit « stateless ».

Un troisième mode de réalisation consiste à inclure la deuxième information comme paramètre de l'entête « Refer-To ». Elle peut alors être introduite par un mot-clé, préalablement spécifié. Ce mot clé est arbitraire et peut être « route= ».

Ainsi, un entête « Refer-To » inclus dans le message de signalisation M₁ peut avoir pour forme :
Refer-to: <sip:b@dm.com;route=c@dc.com>

Cet entête est automatiquement utilisé par l'agent a pour construire le message de signalisation M₂ en recopiant l'adresse sip.b@dm.com dans l'entête « To » et le paramètre « c@dc.com » dans un entête « Route ». De cette façon, le message d'invitation M₂ est également transmis à l'agent B et a l'élément tiers C dans sa route.

A la réception du message de signalisation M₂, l'agent B peut se comporter conformément au comportement spécifié par les RFC 3261 et 3515. Notamment, par le respect des informations de route transmises dans le message d'invitation M₂, l'ensemble du trafic de signalisation entre les agents A et B transitera par l'élément tiers C.

La session multimédia SM peut également être établie entre les deux agents.

L'élément tiers se comporte dans ces échanges comme un proxy, tel que spécifié par le RFC 3261. Notamment, aucun traitement n'est effectué sur les messages transmis, autres que ceux spécifiés par le RFC 3261, et aucune information contextuelle n'est nécessaire à la transmission de ces messages.

Le procédé selon l'invention ne souffre donc pas des inconvénients des solutions de l'état de la technique qui sont basées sur des dispositifs de type B2BUA et sur la mémorisation de données contextuelles.

Il permet de renvoyer des informations de retour F sur le statut de la session multimédia à l'équipement source du stimulus ou événement S.

## Revendications

1. Procédé d'établissement d'une session de communication (SM) entre deux agents de communication (A, B), déclenchée par la réception d'un événement (S) par un élément tiers de communication (C) ; dans lequel, suite à ladite réception, ledit élément tiers transmet à un premier desdits agents (A) un message de signalisation (M₁) adapté pour provoquer l'émission par celui-ci d'un message d'invitation (M₂), destiné au second desdits deux agents (B) ;
**caractérisé en ce que** ce message d'invitation (M2) est prévu pour passer par ledit élément tiers (C), , dans lequel ledit message de signalisation (M₁) est un message «REFER» conforme au protocole SIP, contenant une première information identifiant ledit second desdits agents comme destinataire dudit message d'invitation et une deuxième information identifiant ledit élément tiers comme élément de la route dudit message d'invitation (M₂)..

2. Procédé d'établissement d'une session de communication selon la revendication 1, dans lequel ledit message de signalisation est un message «REFER» conforme au protocole SIP, contenant une première information identifiant ledit second desdits agents comme destinataire dudit message d'invitation et une deuxième information identifiant ledit élément tiers comme élément de la route dudit message d'invitation.

3. Procédé d'établissement d'une session de communication selon la revendication 2, dans lequel ladite première information est incluse dans un entête « Refer-to » dudit message de signalisation.

4. Procédé d'établissement d'une session de communication selon l'une des revendications 2 ou 3, dans lequel ladite deuxième information est également incluse dans ledit entête « refer-to » et distinguée de ladite première information par un signe d'échappement, et dans lequel ledit élément tiers détermine ladite première information à partir dudit entête afin de transmettre ledit message d'invitation vers ledit second agent.

5. Procédé d'établissement d'une session de communication selon la revendication précédente, dans lequel ledit élément tiers supprime le contenu dudit entête « refer-to » à partir du caractère « @ » et remplace ledit signe d'échappement par un caractère « @ » afin de déterminer ladite première information.

6. Procédé d'établissement d'une session de communication selon l'une des revendications 2 ou 3, dans lequel ladite deuxième information est incluse dans un entête « refer-route » dudit message de signalisation.

7. Procédé d'établissement d'une session de communication selon l'une des revendications 2 ou 3, dans lequel ladite deuxième information est incluse comme paramètre dudit entête « refer-to ».

8. Procédé d'établissement d'une session de communication selon l'une des revendications 1 à 7, dans lequel ledit élément tiers de communication (C) transmet des informations de retour (F) à un dispositif (WS, SE, W) à l'origine dudit événement (S).

9. Procédé d'établissement d'une session de communication selon l'une des revendications 1 à 8, dans lequel l'un des dits agents de communication (A, B) est un serveur de contenu.

10. Elément tiers de communication (C) pour l'établissement d'une session de communication (SM) entre deux agents de communication (A, B) à la réception d'un événement (S) **caractérisé en ce qu'**il est prévu pour transmettre à un premier desdits agents (A) un message de signalisation (M₁) adapté pour provoquer l'émission par celui-ci d'un message d'invitation (M₂) destiné au second desdits agents (B) et prévu pour passer par ledit élément tiers (C), dans lequel ledit message de signalisation (M₁) est un message « REFER » conforme au protocole SIP, contenant une première information identifiant ledit second desdits agents comme destinataire dudit message d'invitation et une deuxième information identifiant ledit élément tiers comme élément de la route dudit message d'invitation (M₂).

11. Elément tiers de communication selon la revendication 10, dans lequel ladite première information est incluse dans un entête « Refer-to » dudit message de signalisation.

12. Elément tiers de communication selon l'une des revendications 10 ou 11, dans lequel ladite deuxième information est également incluse dans ledit entête « refer-to » et distinguée de ladite première information par un signe d'échappement, et dans lequel ledit élément tiers est prévu pour déterminer ladite première information à partir dudit entête afin de transmettre ledit message d'invitation vers ledit second agent.

13. Elément tiers de communication selon la revendication précédente, prévu pour supprimer le contenu dudit entête « refer-to » à partir du caractère « @ » et remplacer ledit signe d'échappement par un caractère « @ » afin de déterminer ladite première information.

14. Elément tiers de communication selon l'une des revendications 10 ou 11, dans lequel ladite deuxième information est incluse dans un entête « refer-route » dudit message de signalisation.

15. Elément tiers de communication selon l'une des revendications 10 ou 11, dans lequel ladite deuxième information est incluse comme paramètre dudit entête « refer-to ».

16. Elément tiers de communication selon l'une des revendications 10 à 15, en outre prévu pour transmettre des informations de retour (F) à un dispositif (WS, SE, W) à l'origine dudit événement (S).

17. Réseau de communication comportant au moins un élément tiers de communication selon l'une des revendications 10 à 16.

18. Réseau de communication selon la revendication précédente, dans lequel l'un desdits agents de communication est un serveur de contenu.

## Patentansprüche

1. Verfahren zum Aufbau einer Kommunikationssitzung (SM) zwischen zwei Kommunikationsagenten (A, B), die durch den Empfang eines Ereignisses (S) durch ein Drittkommunikationselement (C) ausgelöst wird, **dadurch gekennzeichnet, dass** das Drittelement nach dem Empfang einem ersten der Agenten (A) eine Signalisierungsnachricht (M1) sendet, die geeignet ist, die Aussendung einer Einladungsnachricht (M2) zu veranlassen, die für den zweiten der beiden Agenten (B) bestimmt ist und die entworfen ist, um das Drittelement (C) zu durchlaufen, wobei die Signalisierungsnachricht (M1) eine "REFER"-Nachricht ist, die dem SIP-Protokoll entspricht und ein erstes Informationselement enthält, das den zweiten der Agenten (B) als Empfänger der Einladungsnachricht identifiziert (M2), und ein zweites Informationselement, das das Drittkommunikationselement (C) als ein Element der Route der Einladungsnachricht (M2) identifiziert.

2. Verfahren zum Aufbau einer Kommunikationssitzung nach Anspruch 1, wobei die Signalisierungsnachricht eine "REFER"-Nachricht ist, die dem SIP-Protokoll entspricht und ein erstes Informationselement enthält, das den zweiten der Agenten als Empfänger der Einladungsnachricht identifiziert, und ein zweites Informationselement, das das Drittelement als Element der Route der Einladungsnachricht identifiziert.

3. Verfahren zum Aufbau einer Kommunikationssitzung nach Anspruch 2, wobei das erste Informationselement in einer "Refer-to"-Kopfzeile der Signalisierungsnachricht enthalten ist.

4. Verfahren zum Aufbau einer Kommunikationssitzung nach einem der Ansprüche 2 und 3, wobei das zweite Informationselement ebenfalls in der "Refer-to"-Kopfzeile enthalten ist und von dem ersten Informationselement durch ein Escape-Symbol unterscheidbar ist, und wobei das Drittelement das erste Informationselement aus der Kopfzeile bestimmt, um die Einladungsnachricht an den zweiten Agenten zu übertragen.

5. Verfahren zum Aufbau einer Kommunikationssitzung nach dem vorhergehenden Anspruch, wobei das Drittelement den Inhalt der "Refer-to"-Kopfzeile aus dem "@"-Zeichen löscht und das Escape-Symbol durch ein "@"-Zeichen ersetzt, um das erste Informationselement zu bestimmen.

6. Verfahren zum Aufbau einer Kommunikationssitzung nach einem der Ansprüche 2 und 3, wobei das zweite Informationselement in einer "Refer-route"-Kopfzeile der Signalisierungsnachricht enthalten ist.

7. Verfahren zum Aufbau einer Kommunikationssitzung nach einem der Ansprüche 2 und 3, wobei das zweite Informationselement als Parameter der "Refer-to"-Kopfzeile enthalten ist.

8. Verfahren zum Aufbau einer Kommunikationssitzung nach einem der Ansprüche 1 bis 7, wobei das Drittkommunikationselement (C) Rückmeldeinformationen (F) an ein Gerät (WS, SE, W) sendet, das das Ereignis (S) auslöst.

9. Verfahren zum Aufbau einer Kommunikationssitzung nach einem der Ansprüche 1 bis 8, wobei einer der Kommunikationsagenten (A, B) ein Inhaltsserver ist.

10. Drittkommunikationselement (C) zum Aufbau einer Kommunikationssitzung (SM) zwischen zwei Kommunikationsagenten (A, B) bei Empfang eines Ereignisses (S), **dadurch gekennzeichnet, dass** es dazu vorgesehen ist, an einen ersten der genannten Agenten (A) eine Signalisierungsnachricht (M1) zu senden, die geeignet ist, dadurch die Aussendung einer Einladungsnachricht (M2) zu veranlassen, die für den zweiten der Agenten (B) bestimmt ist und die entworfen ist, um das Drittelement (C) zu durchlaufen, wobei die Signalisierungsnachricht (M1) eine "REFER"-Nachricht ist, die dem SIP-Protokoll entspricht und ein erstes Informationselement enthält, das den zweiten der Agenten (B) als Empfänger der Einladungsnachricht identifiziert (M2), und ein zweites Informationselement, das das Drittkommunikationselement (C) als ein Element der Route der Einladungsnachricht (M2) identifiziert.

11. Drittkommunikationselement nach Anspruch 10, wobei das erste Informationselement in einer "Refer-to"-Kopfzeile der Signalisierungsnachricht enthalten ist.

12. Drittkommunikationselement nach einem der Ansprüche 10 oder 11, wobei das zweite Informationselement ebenfalls in der "Refer-to"-Kopfzeile enthalten ist und von dem ersten Informationselement durch ein Escape-Symbol unterscheidbar ist, und wobei das Drittelement vorgesehen ist, um das erste Informationselement aus der Kopfzeile zu bestimmen, um die Einladungsnachricht an den zweiten Agenten zu übertragen.

13. Drittkommunikationselement nach dem vorhergehenden Anspruch, das vorgesehen ist, um den Inhalt der "Refer-to"-Kopfzeile aus dem "@"-Zeichen zu löschen und das Escape-Symbol durch ein "@"-Zeichen zu ersetzen, um das erste Informationselement zu bestimmen.

14. Drittkommunikationselement nach einem der Ansprüche 10 oder 11, wobei das zweite Informationselement in einer "Refer-route"-Kopfzeile der Signalisierungsnachricht enthalten ist.

15. Drittkommunikationselement nach einem der Ansprüche 10 und 11, wobei das zweite Informationselement als Parameter der "Refer-to"-Kopfzeile enthalten ist.

16. Drittkommunikationselement nach einem der Ansprüche 10 bis 15, das auch dazu vorgesehen ist, Rückmeldeinformationen (F) an ein Gerät (WS, SE, W) zu senden, das das Ereignis (S) auslöst.

17. Kommunikationsnetzwerk, das mindestens ein Drittkommunikationselement nach einem der Ansprüche 10 bis 16 umfasst.

18. Kommunikationsnetzwerk nach dem vorhergehenden Anspruch, wobei einer der Kommunikationsagenten ein Inhaltsserver ist.

## Claims

1. Method for setting up a communication session (SM) between two communication agents (A, B) which is triggered by the reception of an event (S) by a third-party communication element (C), **characterized in that**, following said reception, said third-party element transmits to a first of said agents (A) a signalling message (M₁) suitable for provoking the emission thereby of an invitation message (M₂) intended for the second of said two agents (B) and designed to pass through said third-party element (C), wherein the signalling message (M₁) is a "REFER" message compliant with SIP protocol containing a first information item identifying the second of said agents (B) as the recipient of the invitation message (M₂) and a second information item identifying the third-party communication element (C) as an element of the route of the invitation message (M₂) .

2. Method for setting up a communication session according to Claim 1, wherein said signalling message is a "REFER" message conforming to the SIP protocol, containing a first information item identifying said second of said agents as recipient of said invitation message and a second information item identifying said third-party element as element of the route of said invitation message.

3. Method for setting up a communication session according to Claim 2, wherein said first information item is included in a "Refer-to" header of said signalling message.

4. Method for setting up a communication session according to one of Claims 2 and 3, wherein said second information item is also included in said "refer-to" header and distinguished from said first information item by an escape symbol, and wherein said third-party element determines said first information item from said header in order to transmit said invitation message to said second agent.

5. Method for setting up a communication session according to the preceding claim, wherein said third-party element deletes the content of said "refer-to" header from the "@" character and replaces said escape symbol with a "@" character in order to determine said first information item.

6. Method for setting up a communication session according to one of Claims 2 and 3, wherein said second information item is included in a "refer-route" header of said signalling message.

7. Method for setting up a communication session according to one of Claims 2 and 3, wherein said second information item is included as parameter of said "refer-to" header.

8. Method for setting up a communication session according to one of Claims 1 to 7, wherein said third-party communication element (C) transmits return information (F) to a device (WS, SE, W) originating said event (S).

9. Method for setting up a communication session according to one of Claims 1 to 8, wherein one of said communication agents (A, B) is a content server.

10. Third-party communication element (C) for setting up a communication session (SM) between two communication agents (A, B) on reception of an event (S) **characterized in that** it is provided to transmit to a first of said agents (A) a signalling message (M₁) suitable for provoking the emission thereby of an invitation message (M₂) intended for the second of said agents (B) and designed to pass through said third-party element (C), wherein the signalling message (M₁) is a "REFER" message compliant with SIP protocol containing a first information item identifying the second of said agents (B) as the recipient of the invitation message (M₂) and a second information item identifying the third-party communication element (C) as an element of the route of the invitation message (M₂).

11. Third-party communication element according to Claim 10, wherein said first information item is included in a "Refer-to" header of said signalling message.

12. Third-party communication element according to one of Claims 10 and 11, wherein said second information item is also included in said "refer-to" header and distinguished from said first information item by an escape symbol, and wherein said third-party element is provided to determine said first information item from said header in order to transmit said invitation message to said second agent.

13. Third-party communication element according to the preceding claim, provided to delete the content of said "refer-to" header from the "@" character and replace said escape symbol with a "@" character in order to determine said first information item.

14. Third-party communication element according to one of Claims 10 and 11, wherein said second information item is included in a "refer-route" header of said signalling message.

15. Third-party communication element according to one of Claims 10 and 11, wherein said second information item is included as parameter of said "refer-to" header.

16. Third-party communication element according to one of Claims 10 to 15, also provided to transmit return information (F) to a device (WS, SE, W) originating said event (S).

17. Communication network comprising at least one third-party communication element according to one of Claims 10 to 16.

18. Communication network according to the preceding claim, wherein one of said communication agents is a content server.
